# EUROPÄISCHE PATENTSCHRIFT

(11) **EP 2 992 746 B1**
(45) Veröffentlichungstag und Bekanntmachung des Hinweises auf die Patenterteilung: **18.12.2019**
(21) Anmeldenummer: 15183751.5
(22) Anmeldetag: 03.09.2015
(51) Int. Cl.: A01B 35/18, A01B 49/02

(54) **BODENBEARBEITUNGSVORRICHTUNG**
SOIL CULTIVATION DEVICE
DISPOSITIF DE TRAITEMENT DE SOL

(30) Priorität: 08.09.2014 DE 202014007134 U
(43) Veröffentlichungstag der Anmeldung: 09.03.2016
(73) Patentinhaber: Hendlmeier, Konrad, 93107 Untersanding (DE)
(72) Erfinder: Hendlmeier, Konrad, 93107 Untersanding (DE)
(74) Vertreter: Glück Kritzenberger Patentanwälte PartGmbB

(56) Entgegenhaltungen:
- EP-A1- 0 191 412
- DE-B- 1 090 892
- DE-U1- 20 109 249
- DE-U1-202006 009 308

## Beschreibung

Die Erfindung betrifft eine Bodenbearbeitungsvorrichtung gemäß dem Oberbegriff des Patentanspruches 1.

Bodenbearbeitungsvorrichtungen, insbesondere zum Zerkleinern von Erdbrocken und/oder Einebenen des zerkleinerten Erdreiches sind hinlänglich aus dem Stand der Technik bekannt. Auch ist eine Trennung des Erdreiches von Wurzeln und/oder weiteren Pflanzenresten mittels derartiger Bodenbearbeitungsvorrichtungen wünschenswert.

Derartige Bodenbearbeitungsvorrichtungen weisen eine Vielzahl von vorzugsweise in Reihen quer zur Arbeitsrichtung angeordnete Scharelemente auf, die bei Ausbildung der Bodenbearbeitungsvorrichtung als Grubber zumindest teilweise durch Grubberschare gebildet sind. Aus der DE 10 2007 005 649 A1 ist der Aufbau und die Funktionsweise von Grubberscharen prinzipiell bekannt.

Beispielsweise offenbart die DE 1 090 892 B einen Kultivator für Hand- und Gespannzug bei dem an einem Längsträger einstellbar unterschiedlich lange Querträger befestigt sind, wobei an den rechteckförmigen Querträgern verschiebbar montierte Scharelemente vorgesehen sind. Die Scharelemente sind dabei als Pfeilschare oder Flachschare ausgebildet und mittels Scharträgern und entsprechenden Befestigungsschellen an den Querträgern befestigt.

Aus der DE 201 09 249 U1 und der DE 20 2006 009 308 U1 sind ferner Bodenbearbeitungsgeräte bekannt, bei denen rotierende Ringschneidelemente für den Eingriff in den Boden vorgesehen sind. Bei dem Gegenstand der DE 20 2006 009 308 U1 ist dabei beispielsweise eine Mehrzahl solcher Ringschneidelemente reihenweise nebeneinander quer zur Fahrtrichtung einander überlappend angeordnet.

Ferner ist aus der DE 203 09 687 U1 ein Bodenbearbeitungsgerät bekannt, das eine Mehrzahl von Scharelementen in Form von Scheibenscharen aufweist. Die Scheibenflächen sind als Ringschneiden ausgebildet, wobei das durch die Scharelemente abgehobene Erdreich durch die von der Ringschneide gebildete Ringöffnung hindurchtritt. Diese bilden damit so genannten Ringschneidelemente aus, die vorzugsweise in einem Winkel zur Arbeitsrichtung angestellt fest an einem Trägerrahmen des Bodenbearbeitungsgerätes angeordnet sind.

Ausgehend von dem voranstehend genannten Stand der Technik liegt der Erfindung die Aufgabe zugrunde, eine verbesserte Bodenbearbeitungsvorrichtung aufzuzeigen, welche flexibel an die jeweiligen Bodenverhältnisse anpassbar ist. Die Aufgabe wird durch eine Bodenbearbeitungsvorrichtung gemäß dem Patentanspruch 1 gelöst.

Der wesentliche Aspekt der erfindungsgemäßen Bodenbearbeitungsvorrichtung ist darin zu sehen, dass die Scharelemente als austauschbare Scharmodule, und zwar als Grubberscharmodule und als Ringschneidmodule, ausgebildet sind, wobei ein Scharmodul über jeweils eine Anschlusseinrichtung lösbar am Trägerrahmen entlang zumindest einer ersten oder einer zweiten Reihe befestigt ist. Dabei sind entlang der ersten Reihe mehrere Grubberscharmodule und entlang der zweiten Reihe mehrere Ringschneidmodule umfassend eine Nabeneinrichtung mit Speichen und eine über die Speichen mit der Nabeneinrichtung verbundene Ringschneide angeordnet, wobei die erste Reihe der zweiten Reihe in Arbeitsrichtung vorgeschaltet ist und ein Grubberscharmodul und ein Ringschneidmodul jeweils über ein federnd ausgebildetes Verbindungselement mit der Anschlusseinrichtung verbunden sind.

Besonders vorteilhaft kann durch die modulartige Ausbildung der Scharelemente ein optimal an die jeweiligen Bodenverhältnisse angepasste Anordnung von als Grubberschare ausgebildeten Scharmodulen und als Ringschneidmodule ausgebildeten Scharmodulen in erster und zweiter Reihe erfolgen. Es wird zunächst mittels der Grubberschare das Erdreich aufgerissen und anschließend feste Erdknoten über die Ringschneiden zerschnitten. Auch können die unterschiedlichen Scharmodule auf Lücke zueinander in der ersten und zweiten Reihe angeordnet werden. Aufgrund der erfindungsgemäßen Ausbildung und/oder Anordnung der unterschiedlichen Scharmodule ist eine flexible Anpassung der Bodenbearbeitungsvorrichtung an die jeweils erforderlichen Bodenbearbeitungsaufgaben möglich.

Weiterhin vorteilhaft sind entlang einer dritten Reihe weitere Grubberscharmodule und/oder Ringschneidmodule über jeweils eine Anschlusseinrichtung lösbar am Trägerrahmen befestigt.

In einer vorteilhaften Ausführungsvariante schließt sich an die Scharmodule ein walzenförmiges Bodenbearbeitungselement, vorzugsweise eine Nachlaufwalze an.

Vorteilhaft weist ein Grubberscharmodul eine Grubberschar gefolgt von einem Scharstiel auf, wobei in einer bevorzugten Ausführungsvariante das Grubberscharmodul über ein federnd ausgebildetes gebogenes Federstahlelement mit der Anschlusseinrichtung verbindbar ist. Vorzugsweise ist der Scharstiel des Grubberscharmoduls über das gebogene Federstahlelement mit der Anschlusseinrichtung verbindbar.

Analog hierzu ist weiter vorteilhaft das Ringschneidmodul ebenfalls über ein federnd ausgebildetes gebogenes Federstahlelement mit der Anschlusseinrichtung verbindbar, wobei die Nabeneinrichtung eines Ringschneidmodules über das federnd ausgebildete Verbindungselement, insbesondere das gebogene Federstahlelement mit der Anschlusseinrichtung verbindbar ist.

In einer bevorzugten Ausführungsvariante ist das gebogene Federstahlelement zumindest teilweise aus einem flachen Federstahlband hergestellt.

Die Anschlusseinrichtung ist vorzugsweise zur klemmenden Befestigung des federnd ausgebildeten Verbindungselementes eingerichtet.

In einer Ausführungsvariante der Erfindung weist das gebogene Federstahlelement zumindest einen ersten ebenen Anschlussabschnitt gefolgt von einem gebogenen Verbindungsabschnitt und einem zweiten ebenen Anschlussabschnitt aufweist, wobei die Anschlusseinrichtung vorzugsweise zur klemmenden Befestigung des zweiten ebenen Anschlussabschnittes des gebogenen Federstahlelementes eingerichtet ist. Besonders vorteilhaft wird hierdurch ein einfaches und schnelles Wechseln der unterschiedlichen Module ermöglicht, wobei alle Anschlussabschnitte zur Aufnahme eines Ringschneidmoduls oder eines Grubberscharmoduls.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: eine schematische Seitenansicht auf eine erfindungsgemäße Bodenbearbeitungsvorrichtung,
- Fig. 2: eine schematische Draufsicht auf die erfindungsgemäße Bodenbearbeitungsvorrichtung gemäß Figur 1,
- Fig. 3: eine schematische Vorderansicht eines Ringschneidmoduls und
- Fig. 4: eine schematische Vorderansicht eines Grubberscharmoduls.

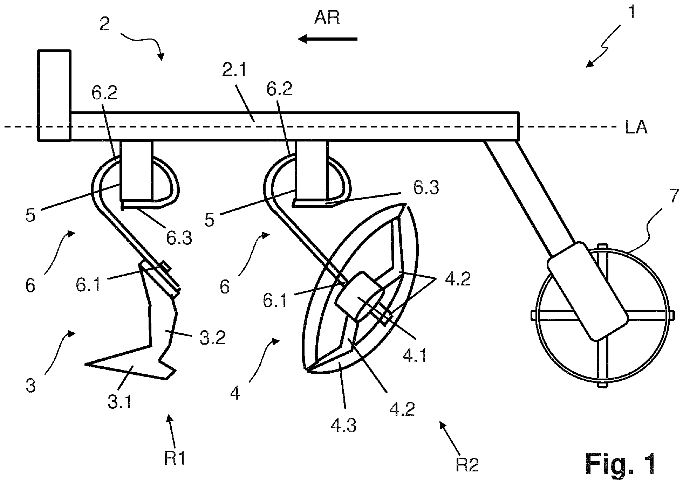

Figur 1 zeigt beispielhaft eine schematische Seitenansicht einer erfindungsgemäßen Bodenbearbeitungsvorrichtung 1.

Die erfindungsgemäße Bodenbearbeitungsvorrichtung 1 ist für eine Arbeitsrichtung AR ausgelegt, welche im Wesentlichen der Fahrrichtung der Zugmaschine entspricht, an dem die Bodenbearbeitungsvorrichtung 1 moniert ist. Die Arbeitsrichtung AR verläuft somit parallel zur Längsachse LA der Bodenbearbeitungsvorrichtung 1. Die erfindungsgemäße Bodenbearbeitungsvorrichtung 1 bildet vorzugsweise einen Grubber mit unterschiedlichen Scharelementen 3, 4 aus.

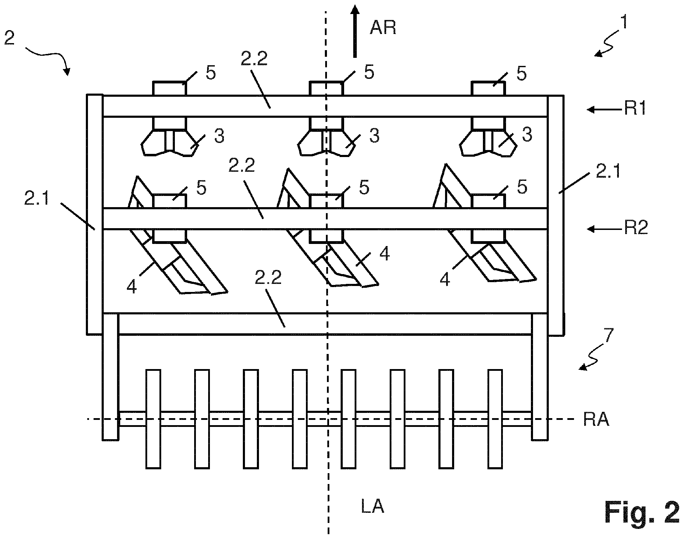

Die erfindungsgemäße Bodenbearbeitungsvorrichtung 1 weist zumindest einen Trägerrahmen 2 auf, der in den Figuren 1 und 2 beispielhaft angedeutet ist. Der Trägerrahmen 2 der Bodenbearbeitungsvorrichtung 1 kann über geeignete Kupplungsvorrichtungen direkt mit einer Zugmaschine, beispielsweise einem Traktor verbunden sein.

Ferner weist der Trägerrahmen 2 beispielsweise mehrere Querträgerrahmenelemente 2.1 und Längsträgerrahmenelemente 2.2 auf, die vorzugsweise fest miteinander verbunden sind, vorzugsweise miteinander verschweißt sind. Der Trägerrahmen 2 ist vorzugsweise aus Metall, insbesondere Stahl hergestellt.

Die Bodenbearbeitungsvorrichtung 1 weist mehrere, in zumindest zwei parallel zueinander und quer zur Arbeitsrichtung AR der Bodenbearbeitungsvorrichtung 1 verlaufenden Reihen R1, R2 mehrere Scharelemente 3, 4 auf, die beabstandet zueinander am Trägerrahmen 2, vorzugsweise dessen Querträgerrahmenelemente 2.2 angeordnet sind. Erfindungsgemäß sind die Scharelemente als austauschbare Scharmodule 3, 4 ausgebildet, wobei ein Scharmodul 3, 4 über jeweils eine Anschlusseinrichtung 5 lösbar am Trägerrahmen 2 entlang zumindest einer ersten oder einer zweiten Reihe R1, R2 befestigt ist, und zwar sind entlang der ersten Reihe R1 mehrere Grubberscharmodule 3 und entlang der zweiten Reihe R2 mehrere Ringschneidmodule angeordnet.

Figur 1 und 2 zeigt die Bodenbearbeitungsvorrichtung 1 bei der entlang der ersten Reihe R1 mehrere Grubberscharmodule 3 und entlang der zweiten Reihe R2 mehrere Ringschneidmodule 4 über die Anschlusseinrichtungen 5 am Trägerrahmen 2, vorzugsweise dessen Querträgerrahmenelemente 2.2 angeordnet sind. Die Anschlusseinrichtungen 5 sind zur lösbaren Befestigung der Scharmodule 3, 4 am Trägerrahmen 2 ausgebildet, und zwar beispielsweise über eine Klemm- und/oder Schraubverbindung.

Auch ist es denkbar die Scharmodule 3, 4 in der ersten und zweiten Reihe R1, R2 versetzt zueinander anzuordnen, so dass eine Anordnung der Scharmodule 3, 4 auf Lücke entsteht.

Auch können in einer weiteren, nicht dargestellten Ausführungsvariante entlang einer dritten Reihe weitere Grubberscharmodule 3 und/oder Ringschneidmodule 4 über weitere Anschlusseinrichtungen 5 lösbar am Trägerrahmen 2 bzw. dessen Querträgerrahmenelementen 2.2 lösbar befestigt sein.

Ein Grubberscharmodul 3 umfasst in der erfindungsgemäßen Ausführung zumindest eine Grubberschar 3.1 und einen Scharstiel 3.2, der über ein federnd ausgebildetes Verbindungselement, insbesondere ein gebogenes Federstahlelement 6 lösbar mit einer Anschlusseinrichtung 5 verbunden ist. Das gebogene Federstahlelement 6 dient damit zur federnden und lösbaren Befestigung des Scharstiels 3.2 und der damit verbundenen Grubberschar 3.1 am Trägerrahmen 2, und zwar mittels der Anschlusseinrichtungen 5. Das gebogene Federstahlelement 6 weist einen das eine freie Ende bildenden ebenen erster Anschlussabschnitt 6.1 auf, an dem der Scharstiel 3.2 lösbar befestigt ist, vorzugsweise mittels einer Schraubverbindung. An den ebenen Anschlussabschnitt 6.1 schließt sich ein eine näherungsweise 180° Biegung ausführender Verbindungsabschnitt 6.2 an, der in einen zweiten ebenen Anschlussabschnitt 6.3 übergeht und hierbei mit dem Verbindungsabschnitt 6.2 einen spitzen Winkel einschließt. Der zweite ebene Anschlussabschnitt 6.3 bildet das weitere freie Ende des gebogenen Federstahlelementes 6. Das gebogene Federstahlelement 6 ist über den zweiten ebenen Anschlussabschnitt 6.3 mit der Anschlusseinrichtungen 5 verbunden, welche hierzu zumindest einen ebenen Anlageabschnitt aufweist, an dem der zweite ebene Anschlussabschnitt 6.3 flächig anliegt und durch Klemmen oder mittels einer Schraubverbindung gehalten wird.

In analoger Weise ist ein erfindungsgemäß ausgebildetes Ringschneidmodul 4 über ein federn ausgebildetes Verbindungselement, insbesondere ein gebogenes Federstahlelement 6 mit der Anschlusseinrichtungen 5 des Trägerrahmens 2 verbunden. Unterschiedlich zum Grubberscharmodul 3 ist jedoch am ersten ebenen Anschlussabschnitt 6.1 des Federstahlelementes 6 entweder direkt oder indirekt das freie Ende des Nabenrohres einer Nabeneinrichtung 4.1 des Ringschneidmodules 4 lösbar befestigt. Die Nabeneinrichtung 4.1 ist über mehrere Speichen 4.2 mit der Ringschneide 4.3 des Ringschneidmodules 4 vorzugsweise fest verbunden. In einer bevorzugten Ausführungsvariante ist die Ringschneide 4.3 des Ringschneidmodules 4 schräg zur Längsachse LA bzw. zur Arbeitsrichtung AR angestellt, d.h. schließt mit Längsachse LA der Bodenbearbeitungsvorrichtung 1 einen spitzen Winkel ein.

Die Anschlusseinrichtung 5 ist beispielsweise als an der Unterseite eines Querträgerrahmenelemente 2.2 angeordnete, im Querschnitt U-förmiges Rahmenelement ausgebildet, welches mit der Unterseite des Querträgerrahmenelement 2.2 eine rechteckförmige oder quadratische Durchführungsöffnung einschließt. Durch diese wird in einer bevorzugten Ausführungsvariante das Federstahlelement 6, insbesondere dessen Verbindungsabschnitt 6.2 hindurchgeführt und der zweite ebene Anschlussabschnitt 6.3 mit der Unterseite des U-förmigen Rahmenelementes verbunden. Damit erstreckt sich im montierten Zustand der Verbindungsabschnitt 6.2 des Federstahlelementes 6 durch die rechteckförmige oder quadratische Durchführungsöffnung und kann damit darin frei Schwingen.

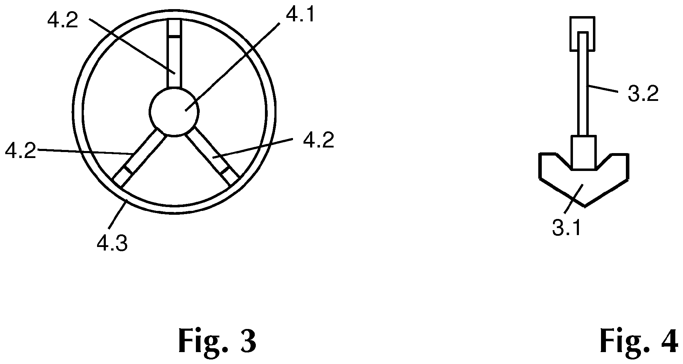

In Figur 3 ist beispielhaft eine schematische Vorderansicht des Ringschneidmoduls 4 und in Figur 4 eine schematische Vorderansicht des Grubberscharmoduls 3, jeweils ohne Federelement 6 dargestellt.

In einer bevorzugten Ausführungsvariante kann die Bodenbearbeitungsvorrichtung 1 noch zumindest ein walzenförmiges Bodenbearbeitungselement, vorzugweise eine Nachlaufwalze 7 aufweisen, welche am Ende des Trägerrahmens 2 angeordnet ist und um eine senkrecht zur Längsachse LA verlaufende Rotationsachse RA rotiert.

Es versteht sich, dass anstelle eines gebogenen Federstahlelementes 6 auch alternative Ausführungsvarianten eines federnden Verbindungselementes, beispielsweise eine federnde Verbindung des Verbindungselementes in der Anschlusseinrichtung möglich sind, ohne dass hierdurch der der Erfindung zugrunde liegende Erfindungsgedanke verlassen wird.

### Bezugszeichenliste

- 1: Bodenbearbeitungsgerät
- 2: Trägerrahmen
- 2.1: Querträgerrahmenelemente
- 2.2: Längsträgerrahmenelemente
- 3: Grubberscharmodul
- 3.1: Grubberschar
- 3.2: Scharstiel
- 4: Ringschneidmodul
- 4.1: Nabeneinrichtung
- 4.2: Speichen
- 4.3: Ringschneide
- 5: Anschlusseinrichtung
- 6: federndes Verbindungselement, insbesondere gebogenes Federstahlelement
- 6.1: erster ebener Anschlussabschnitt
- 6.2: gebogener Verbindungsabschnitt
- 6.3: zweiter ebener Anschlussabschnitt
- 7: Nachlaufwalze

- AR: Arbeitsrichtung
- LA: Längsachse
- RA: Rotationsachse
- R1: erste Reihe
- R2: zweite Reihe

## Patentansprüche

1. Bodenbearbeitungsvorrichtung (1) umfassend zumindest einen Trägerrahmen (2), an dem in zumindest zwei parallel zueinander und quer zur Längsachse (LA) der Bodenbearbeitungsvorrichtung (1) verlaufende Reihen (R1, R2) mehrere Scharelemente (3, 4) beabstandet zueinander angeordnet sind, wobei die Bodenbearbeitungsvorrichtung (1) für eine parallel zur Längsachse (LA) verlaufende Arbeitsrichtung (AR) ausgelegt ist, bei der die Scharelemente als austauschbare Scharmodule (3, 4), und zwar als Grubberscharmodule (3) und als Ringschneidmodule (4) ausgebildet sind, wobei ein Scharmodul (3, 4) über jeweils eine Anschlusseinrichtung (5) lösbar am Trägerrahmen (2) entlang zumindest einer ersten oder einer zweiten Reihe (R1, R2) befestigt ist, bei der entlang der ersten Reihe (R1) mehrere Grubberscharmodule (3) und entlang der zweiten Reihe (R2) mehrere Ringschneidmodule (4) umfassend eine Nabeneinrichtung (4.1) mit Speichen (4.2) und eine über die Speichen (4.2) mit der Nabeneinrichtung (4.1) verbundene Ringschneide (4.3) angeordnet sind, wobei die erste Reihe (R1) der zweiten Reihe (R2) in Arbeitsrichtung (AR) vorgeschaltet ist und ein Grubberscharmodul (3) und ein Ringschneidmodul (4) jeweils über ein federnd ausgebildetes Verbindungselement mit der Anschlusseinrichtung (5) verbunden sind.

2. Bodenbearbeitungsvorrichtung nach Anspruch 1, **dadurch gekennzeichnet, dass** entlang einer dritten Reihe (R3) weitere Grubberscharmodule (3) und/oder Ringschneidmodule (4) über jeweils eine Anschlusseinrichtung (5) lösbar am Trägerrahmen (2) befestigt sind.

3. Bodenbearbeitungsvorrichtung nach Anspruch 1 oder 2, **dadurch gekennzeichnet, dass** sich an Scharmodule (3, 4) entlang der Längsachse (LA) ein walzenförmiges Bodenbearbeitungselement, vorzugsweise eine Nachlaufwalze (7) anschließt.

4. Bodenbearbeitungsvorrichtung nach einem der Ansprüche 1 bis 3, **dadurch gekennzeichnet, dass** ein Grubberscharmodul (3) eine Grubberschar (3.1) gefolgt von einem Scharstiel (3.2) aufweist.

5. Bodenbearbeitungsvorrichtung nach einem der Ansprüche 1 bis 4, **dadurch gekennzeichnet, dass** das Grubberscharmodul (3) über ein gebogenes Federstahlelement (6) mit der Anschlusseinrichtung (5) verbunden ist.

6. Bodenbearbeitungsvorrichtung nach Anspruch 5, **dadurch gekennzeichnet, dass** der Scharstiel (3.2) des Grubberscharmoduls (3) über das gebogene Federstahlelement (6) mit der Anschlusseinrichtung (5) verbindbar ist.

7. Bodenbearbeitungsvorrichtung nach einem der Ansprüche 1 bis 6, **dadurch gekennzeichnet, dass** das Ringschneidmodul (4) über ein gebogenes Federstahlelement (6) mit der Anschlusseinrichtung (5) verbunden ist.

8. Bodenbearbeitungsvorrichtung nach Anspruch 7, **dadurch gekennzeichnet, dass** die Nabeneinrichtung (4.1) eines Ringschneidmodules (4) über das federnd ausgebildete Verbindungselement, insbesondere das gebogene Federstahlelement (6) mit der Anschlusseinrichtung (5) verbunden ist.

9. Bodenbearbeitungsvorrichtung nach einem der Ansprüche 5 bis 8, **dadurch gekennzeichnet, dass** das gebogene Federstahlelement (6) zumindest teilweise aus einem flachen Federstahlband hergestellt ist.

10. Bodenbearbeitungsvorrichtung nach einem der Ansprüche 5 bis 9, **dadurch gekennzeichnet, dass** das gebogene Federstahlelement (6) zumindest einen ersten ebenen Anschlussabschnitt (6.1) gefolgt von einem gebogenen Verbindungsabschnitt (6.2) und einem zweiten ebenen Anschlussabschnitt (6.3) aufweist.

11. Bodenbearbeitungsvorrichtung nach einem der Ansprüche 5 bis 10, **dadurch gekennzeichnet, dass** die Anschlusseinrichtung (5) zur klemmenden Befestigung des federnd ausgebildeten Verbindungselementes eingerichtet ist.

12. Bodenbearbeitungsvorrichtung nach Anspruch 11, **dadurch gekennzeichnet, dass** die Anschlusseinrichtung (5) zur klemmenden Befestigung des zweiten ebenen Anschlussabschnittes (6.3) des gebogenen Federstahlelement (6) eingerichtet ist.

## Claims

1. A soil cultivation device (1) comprising at least one carrier frame (2) on which a plurality of share elements (3, 4) are arranged spaced apart from each other in at least two rows (R1, R2) extending parallel to each other and transverse to the longitudinal axis (LA) of the soil cultivation device (1), wherein the soil cultivation device (1) is designed for an operating direction (AR) extending parallel to the longitudinal axis (LA), wherein the share elements are designed as exchangeable share modules (3, 4), namely as cultivator share modules (3) and as ring cutting modules (4), wherein a share module (3, 4) is detachably fixed via a respective connecting device (5) on the carrier frame (2) along at least one first or one second row (R1, R2), wherein a plurality of cultivator share modules (3) are arranged along the first row (R1) and a plurality of ring cutting modules (4) are arranged along the second row (R2) and comprise a hub device (4.1) with spokes (4.2) and a ring cutter (4.3) connected to the hub device (4.1) via the spokes (4.2), wherein the first row (R1) is arranged in front of the second row (R2) in the operating direction (AR) and a cultivator share module (3) and a ring cutting module (4) are respectively connected to the connecting device (5) via a spring loaded connecting element.

2. Soil cultivation device according to claim 1, **characterized in that** additional cultivator share modules (3) and/or ring cutting modules (4) are detachably fixed on the carrier frame (2) along a third row (R3) via a respective connecting device (5).

3. Soil cultivation device according to claim 1 or 2, **characterized in that** a roller shaped soil cultivating element, preferably a follower roller (7) adjoins to the share modules (3, 4) along the longitudinal axis (LA).

4. Soil cultivation device according to any one of claims 1 to 3, **characterized in that** a cultivator share module (3) has a cultivator share (3.1) followed by a share post (3.2).

5. Soil cultivation device according to any one of claims 1 to 4, **characterized in that** the cultivator share module (3) is connected to the connecting device (5) via a curved spring steel element (6).

6. Soil cultivation device according to claim 5, **characterized in that** the share post (3.2) of the cultivator share module (3) is connectable to the connecting device (5) via the curved spring steel element (6).

7. Soil cultivation device according to any one of claims 1 to 6, **characterized in that** the ring cutting module (4) is connected to the connecting device (5) via a curved spring steel element (6).

8. Soil cultivation device according to claim 7, **characterized in that** the hub device (4.1) of a ring cutting module (4) is connected to the connecting device (5) via the spring loaded connecting element, in particular the curved spring steel element (6).

9. Soil cultivation device according to any one of claims 5 to 8, **characterized in that** the curved spring steel element (6) is produced at least partially from a flat spring steel strip.

10. Soil cultivation device according to any one of claims 5 to 9, **characterized in that** the curved spring steel element (6) has at least one first flat attachment section (6.1) followed by a curved connecting section (6.2) and a second flat attachment section (6.3).

11. Soil cultivation device according to any one of claims 5 to 10, **characterized in that** the connecting device (5) is equipped for clamping mounting of the spring loaded designed connecting element.

12. Soil cultivation device according to claim 11, **characterized in that** the connecting device (5) is equipped for clamping mounting of the second flat attachment section (6.3) of the curved spring steel element (6).

## Revendications

1. Dispositif de traitement du sol (1) comprenant au moins un cadre de support (2), sur lequel dans aux moins deux rangées (R1, R2) placées à la parallèle l'une de l'autre et à la transversale de l'axe longitudinal (LA) du dispositif de traitement du sol (1), plusieurs éléments de soc (3, 4) sont placés avec un écart mutuel, le dispositif de traitement du sol (1) étant conçu pour une direction de travail (AR) s'écoulant à la parallèle de l'axe longitudinal (LA), sur lequel les éléments de soc sont conçus sous la forme de modules de soc (3, 4) interchangeables, et à savoir sous la forme de modules de soc de cultivateur (3) et de modules de coupe annulaire (4), un module de soc (3, 4) étant fixé de manière amovible par l'intermédiaire de chaque fois un dispositif de raccordement (5) sur le cadre de support (2), le long d'au moins une première ou une deuxième rangée (R1, R2), sur lequel, le long de la première rangée (R1) sont placés plusieurs modules de soc de cultivateur (3) et le long de la deuxième rangée (R2) sont placés plusieurs modules de coupe annulaire (4), comprenant un système de moyeu (4.1) pourvu de rayons (4.2) et d'un tranchant annulaire (4.3) relié par l'intermédiaire des rayons (4.2) avec le système de moyeu (4.1), la première rangée (R1) étant montée en amont de la deuxième rangée (R2), dans la direction de travail (AR) et un module de soc de cultivateur (3) et un module de coupe annulaire (4) étant reliés chacun par l'intermédiaire d'un élément de liaison conçu sous forme résiliente avec le dispositif de raccordement (5).

2. Dispositif de traitement du sol selon la revendication 1, **caractérisé en ce que** le long d'une troisième rangée (R3), des modules de soc de cultivateur (3) et/ou des modules de coupe annulaire (4) supplémentaires sont fixés de manière amovible, par l'intermédiaire de chacun un dispositif de raccordement (5) sur le cadre de support (2).

3. Dispositif de traitement du sol selon la revendication 1 ou 2, **caractérisé en ce que** sur des modules de soc (3, 4), le long de l'axe longitudinal (LA) se raccorde un élément de traitement du sol en forme de rouleau, de préférence un rouleau suiveur (7)

4. Dispositif de traitement du sol selon l'une quelconque des revendications 1 à 3, **caractérisé en ce qu'**un module de soc de cultivateur (3) comporte un soc de cultivateur (3.1), suivi d'une tige de soc (3.2).

5. Dispositif de traitement du sol selon l'une quelconque des revendications 1 à 4, **caractérisé en ce que** le module de soc de cultivateur (3) est relié par l'intermédiaire d'un élément en acier à ressort (6) curviligne avec le dispositif de raccordement (5).

6. Dispositif de traitement du sol selon la revendication 5, **caractérisé en ce que** la tige de soc (3.2) du module de soc de cultivateur (3) peut être reliée par l'intermédiaire de l'élément en acier à ressort (6) curviligne avec le dispositif de raccordement (5).

7. Dispositif de traitement du sol selon l'une quelconque des revendications 1 à 6, **caractérisé en ce que** le module de coupe annulaire (4) est relié par l'intermédiaire d'un élément en acier à ressort (6) curviligne avec le dispositif de raccordement (5).

8. Dispositif de traitement du sol selon la revendication 7, **caractérisé en ce que** le système de moyeu (4.1) d'un module de coupe annulaire (4) est relié par l'intermédiaire de l'élément de liaison conçu sous forme résiliente, notamment de l'élément en acier à ressort (6) curviligne avec le dispositif de raccordement (5).

9. Dispositif de traitement du sol selon l'une quelconque des revendications 5 à 8, **caractérisé en ce que** l'élément en acier à ressort (6) curviligne est fabriqué au moins partiellement en un feuillard d'acier à ressort plat.

10. Dispositif de traitement du sol selon l'une quelconque des revendications 5 à 9, **caractérisé en ce que** l'élément en acier à ressort (6) curviligne comporte au moins une première section de raccordement (6.1) plane, suivie d'une section de liaison (6.2) curviligne et d'une deuxième section de raccordement (6.3) plane.

11. Dispositif de traitement du sol selon l'une quelconque des revendications 5 à 10, **caractérisé en ce que** le dispositif de raccordement (5) est aménagé pour la fixation par serrage de l'élément de liaison conçu de manière résiliente.

12. Dispositif de traitement du sol selon la revendication 11, **caractérisé en ce que** le dispositif de raccordement (5) est aménagé pour la fixation par serrage de la deuxième section de raccordement (6.3) plane de l'élément en acier à ressort (6) curviligne.
